# EUROPEAN PATENT APPLICATION

(11) **EP 3 200 446 A1**
(43) Date of publication of application: **02.08.2017**
(21) Application number: 16767124.7
(22) Date of filing: 06.07.2016
(51) Int. Cl.: H04N 5/235, H04N 5/225, G06T 5/50

(54) **METHOD AND APPARATUS FOR GENERATING HIGH DYNAMIC RANGE IMAGE**

(30) Priority: 08.12.2015 CN 201510896312
(71) Applicant: LE Holdings (Beijing) Co., Ltd., Beijing 100025 (CN); Lemobile Information Technology (Beijing) Co., Ltd., Beijing 101300 (CN)
(72) Inventor: WU, Kai, Beijing 101300 (CN)
(74) Representative: Meissner Bolte Partnerschaft mbB
(86) International application number: PCT/CN2016/088996
(87) International publication number: WO 2017/096866

(57) **Abstract**

Embodiments of the present disclosure disclose a method and device for generating an HDR image. The method comprises simultaneously obtaining different images of a target to be shot through the shooting apparatus with different shooting exposure settings; fusing the images obtained from different shooting apparatus according to brightness so as to obtain an HDR image of the target to be shot. The method and device for generating an HDR image provided in these embodiments of the present disclosure can reduce the shooting time of the HDR image.

## Description

The present application claims the priority of Chinese Patent Application No. 201510896312.X, titled "Method and Device for Generating High Dynamic Range Images", filed to the State Intellectual Property Office of China (SIPO) on December 8, 2015, the entire content of which is incorporated hereby by reference.

### Technical Field

Embodiments of the present disclosure relate to the technical field of smart terminals, for example, to a method and device for generating a High Dynamic Range image.

### Technical Background

With the popularity of digital cameras and various mobile terminals equipped with camera heads, taking digital photos has been common occurred in people's life. Smart phones nowadays have developed over the world, and photographing function has become a major selling point. However, in order to adapt to the market, mobile phones are made thinner and thinner. Thus, the thickness of shooting apparatus (camera) must be restricted in order to ensure the thickness of an entire phone. Theoretically, the larger the photosensitive area of shooting apparatus sensor is, the better picture quality can be obtained. In order to increase the photosensitive area of a single camera head, the camera head needs to be equipped with thicker lenses, but this cannot meet the design requirements of both structure and appearance.

When shooting digital photos, people often encounter the situation of backlighting of the target to be shot. The photos taken in this case often make the quality of images greatly reduced because of loss of the details of highlights or dark parts of images. The above problems can be addressed better if a high dynamic range (HDR) shooting mode is employed.

HDR function can improve the quality of pictures, rendering more details in photos. In the process of implementing the present application, the inventors found that: the shooting process of an HDR image in the related art generally uses the same shooting apparatus to shoot several times, and then fuses the images obtained by multiple shooting. Usually three continuously shot photos can be synthesized to one photo, which means the shooting time of the HDR image is a multiple of that of other ordinary images. Long shooting time of HDR tends to cause blurred images and time spent for shooting is long. Moreover, the software for realizing HDR function can only be used after shooting, and HDR function cannot be realized during preview.

### Summary

In view of this, embodiments of the present disclosure propose a method and a device for generating an HDR image, which can reduce the shooting response time of the HDR image.

In an aspect, embodiments of the present disclosure provide a method for generating an HDR image, which comprises: obtaining simultaneously at least two images of the target to be shot by at least two shooting apparatuses configured with different exposure values on the terminal; and

fusing the at least two images according to brightness so as to form the HDR image of the target to be shot.

In a further aspect, embodiments of the present disclosure also provide a device for generating an HDR image, which comprises:
an image acquisition module, configured for obtaining simultaneously at least two images of the target to be shot by at least two shooting apparatuses configured with different exposure values on the terminal; and
a fusion module, configured for fusing the at least two images according to brightness so as to form the HDR image of the target to be shot.

The method and device for generating an HDR image provided in embodiments of the present disclosure simultaneously obtains multiple images of the target to be shot through multiple shooting apparatuses with different exposure values, and fuses the multiple images according to the brightness of the multiple images, thus avoiding multiple shootings in the current HDR image acquisition process and effectively reducing the shooting time of the HDR image.

### Description of Drawings

Fig. 1 is a process flow chart of the method for generating an HDR image provided in the first embodiment of the present disclosure;
Fig. 2 is a process flow chart of fusion operation in the method for generating an HDR image provided in the second embodiment of the present disclosure;
Fig. 3 is a structural diagram of the device for generating an HDR image provided in the third embodiment of the present disclosure; and
Fig. 4 is a schematic diagram of the hardware structure of a terminal provided in embodiments of the present disclosure.

### Detailed description of the Preferred Embodiment

Below the present disclosure is further described in details with reference to the accompanying drawings and the embodiments. It can be understood that the embodiments described herein are merely used for explaining the present disclosure, rather than limiting it. Additionally, it should be noted that, for the convenience of description, only part but not all of the contents associated with the present disclosure is shown in the accompanying drawings.

### The First Embodiment

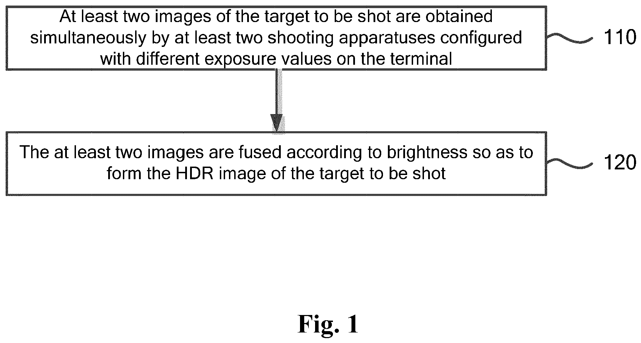

Fig. 1 is the process flow chart for the method for generating an HDR image provided in the first embodiment of the present disclosure. In the present technical solution, the method for generating an HDR image is performed by the device for generating an HDR image. Moreover, the device for generating an HDR image is integrated into an electronic apparatus for taking an HDR image. The electronic apparatus can be a tablet or a smart phone, etc. Also, the electronic apparatus includes an image signal processor (ISP).

Referring to Fig. 1, the method for generating an HDR image includes: Step S110 and Step S120.

In Step S110, at least two images of the target to be shot are obtained simultaneously by at least two shooting apparatuses configured with different exposure values on the terminal.

The shooting apparatus can be a digital camera, or a camera head. The number of the shooting apparatus is at least two. Optionally, the number of the shooting apparatus is an odd number. Optionally, the number of the shooting apparatus is three.

Each shooting apparatus is communicatively connected with the ISP. The communication connection can be various connections within the computer device. The communication connection can also be various external communication buses outside of the computing apparatus, e.g. a USB bus.

The shooting apparatus are configured with different exposure parameters respectively. Optionally, taking the number of shooting apparatus being three as an example, the exposure value of one of the three shooting apparatus is configured to EV0, another is configured to EV + 1, and the third one is configured to EV - 1.

Using individual shooting apparatus to take photos of the target to be shot, for example, a person, multiple images with different exposure values can be obtained simultaneously. Because all shooting apparatus are provided on the terminal, the difference between the captured images due to their different positions is very slight, which is negligible.

In Step S120, the at least two images are fused according to brightness so as to form the HDR image of the target to be shot.

Because the exposure parameter settings of different shooting apparatus are different, the images obtained by different shooting apparatus have different levels of image details in different frequency bands. For example, the images obtained by the shooting apparatus with the exposure value of EV + 1 contain more details in low frequency portion, whereas the images obtained by the shooting apparatus with the exposure value of EV-1 contain more details in high frequency portion.

In order to realize the generation of the HDR image, one of a plurality of images can be taken as the reference image to identify the overexposed blocks and underexposed blocks in the reference image. Then, the image data of other two images are fused according to the identified overexposed and underexposed blocks so as to ultimately generate the HDR image.

In the present embodiment, by obtaining simultaneously at least two images of the target to be shot by at least two shooting apparatuses configured with different exposure values on the terminal, and fusing the at least two images according to brightness so as to form the HDR image of the target to be shot, the shooting time of HDR image can be effectively reduced.

On the basis of the above solution, after fusing the at least two images according to brightness so as to form the HDR image of the target to be shot, the method also includes the preview display of the HDR image. That is, the generated HDR image can be configured to perform preview display, thus solving the problem of inability to preview when using the software to realize HDR function.

### The Second Embodiment

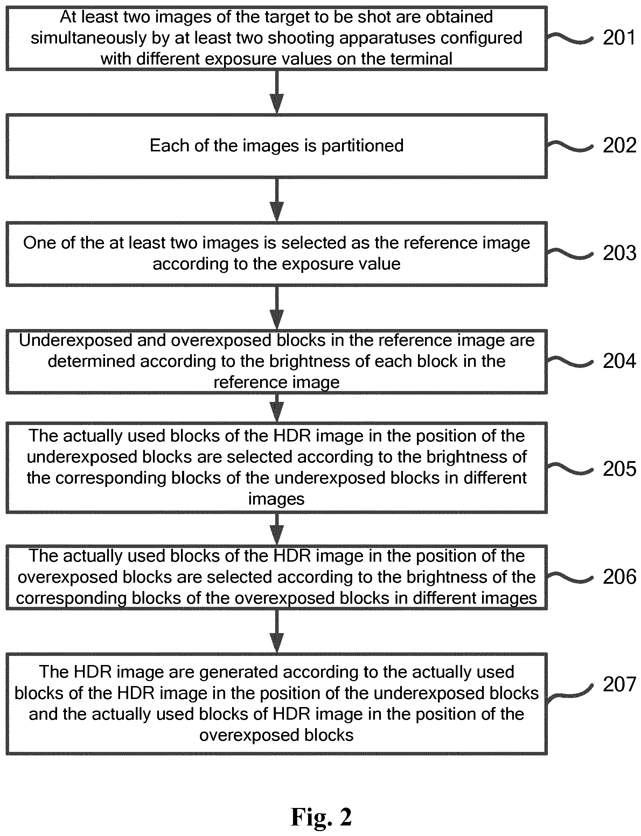

Fig. 2 is the process flow chart for the method for generating an HDR image provided in the second embodiment of the present disclosure. This embodiment provides an implementation of fusion operation in the method for generating an HDR image based on the above embodiment of the present disclosure.

Referring to Fig. 2, the method includes: Steps S201-207.

In Step S201, at least two images of the target to be shot are obtained simultaneously by at least two shooting apparatuses configured with different exposure values on the terminal.

In this embodiment, it is assumed that the shooting apparatus are configured with exposure values of EV-1, EV0, EV + 1 respectively obtain three images.

In the above embodiment, the operation of fusing the at least two images according to brightness so as to form the an HDR image of the target to be shot includes steps as follows.

In Step S202, each of the images is partitioned.

Optionally, each image is partitioned by using the same partitioning rules, and the positions of blocks in each image correspond to each other. For example, each image obtained from different shooting apparatus can be evenly partitioned by 16 rows by 12 columns. After performing the above partitioning, each original image is divided into 192 blocks.

In Step S203, one of the at least two images is selected as the reference image according to the exposure value.

For example, images are obtained from an odd number of shooting apparatuses. When selecting the reference image, it is preferable for selecting an image with the exposure value having a middle value as the reference image. In the above example that the images are obtained by three shooting apparatus, an image with the exposure value of EV0 is selected as the reference image.

In Step S204, underexposed and overexposed blocks in the reference image are determined according to the brightness of each block in the reference image.

In the reference image, a brightness difference is present between the blocks, and the underexposed and overexposed blocks among the blocks can be distinguished according to preset rules. There can be a variety of the preset rules, and optionally two ways of them are as follows:

The first way: according to the brightness of each block in the reference image, the block with the block brightness higher than a threshold of overexposure brightness is determined as an overexposed block, and the block with the block brightness lower than a threshold of underexposure brightness is determined as an underexposed block, where the threshold of the overexposure and the threshold of the underexposure brightness are determined according to the average value of brightness of the reference image.

In the above manner, the average value of brightness of the reference image can be directly used to divide overexposure and underexposure. The average value of brightness is the average value of brightness of each block. The brightness of each block can be obtained by identifying and then averaging the brightness of RGB three colors. When the average value of brightness of the reference image is directly used as the thresholds of overexposure brightness and underexposure brightness, the blocks in the reference image are divided into underexposed blocks and overexposed blocks. Preferably, based on the average value of brightness of the reference image, it is possible that the threshold value is set upward as the threshold of overexposure brightness, and the threshold is set downward as the threshold of underexposure brightness. Also, the average value of brightness of the reference image can be substituted into the setting equation to calculate the thresholds of overexposure and underexposure brightness. This allows the reference image to include underexposed blocks, normal blocks and overexposed blocks.

The second way: blocks are ranked according to the brightness of each block in the reference image, and a set number of blocks are selected as overexposed and underexposed blocks, respectively, according to the ranking.

In the above manner, the blocks are ranked according to the order of brightness from high to low, and then a set number of higher-ranking blocks are selected as the overexposed blocks, and a set number of lower-ranking blocks are selected as the underexposed blocks. Of course, they may also be selected according to their proportions. The number of overexposed and the number of underexposed blocks may differ from each other.

One skilled in the art can understand that the manners for identifying the underexposed blocks and the overexposed blocks in the reference image are not limited to the above two ways.

In Step S205, the actually used blocks of the HDR image in the position of the underexposed blocks are selected according to the brightness of the corresponding blocks of the underexposed blocks in different images.

Specifically, the block with the highest brightness in the images can be selected as the actually used block of the HDR image in the position of the underexposed block, according to the brightness of the corresponding blocks of the underexposed block in different images.

For example, assuming that the first block is an underexposed block, by comparing the brightness of the first block in the reference image with the brightness of the first blocks of other images, the first block with the highest brightness in other images is selected as the actually used block. Usually, for the shooting apparatus with a larger exposure value, the shot image block has higher brightness, so that it can be configured to replace the underexposed block in the reference image.

In Step S206, the actually used blocks of the HDR image in the position of the overexposed blocks are selected according to the brightness of the corresponding blocks of the overexposed blocks in different images.

Optically, the block with the lowest brightness in the images can be selected as the actually used block of the HDR image in the position of the overexposed block according to the brightness of the corresponding blocks of the overexposed block in different images.

For example, assuming that the second block is an overexposed block, by comparing the brightness of the second block in the reference image with the brightness of the second blocks of other images, the second block with the lowest brightness in other images is selected as the actually used block. Usually, for the shooting apparatus with a smaller exposure value, the shot image block has lower brightness, so that it can be configured to replace the overexposed block in the reference image.

Step S207, the HDR image are generated according to the actually used blocks of the HDR image in the position of the underexposed blocks and the actually used blocks of HDR image in the position of the overexposed blocks.

After the selection of each actually used block of the HDR image is completed, the actually used blocks are combined together, i.e., the HDR image is generated.

In this embodiment, by partitioning each of the images, selecting one of the at least two images as the reference image according to the exposure value and identifying the underexposed blocks and the overexposed blocks; selecting the actually used blocks of the HDR image in the position of the underexposed blocks according to the brightness of the corresponding blocks of the underexposed blocks in different images; selecting the actually used blocks of the HDR image in the position of the overexposed blocks according to the brightness of the corresponding blocks of the overexposed blocks in different images, and generating HDR image according to the actually used blocks of the HDR image in the position of the underexposed blocks and the actually used blocks of HDR image in the position of the overexposed blocks; the generation of HDR image is realized.

Based on the present embodiment, optionally, after selecting one of the at least two images as the reference image according to the exposure value, the method also includes:
determining images other than the reference image as overexposed and underexposed images, respectively, according to the ranking of the exposure values of each of the shooting apparatuses;
deleting in overexposed images the blocks with the block brightness higher than that of the corresponding blocks of the reference image;
deleting in underexposed images the blocks with the block brightness lower than that of the corresponding blocks of the reference image;

In the above process, before selecting actually used blocks, the overexposed and underexposed images are firstly filtered in order to filter out the blocks which are unlikely to become actually used blocks, so that the subsequent comparison operations can be reduced.

For example, if the image corresponding to EV + 1 is an overexposed image, and the image corresponding to EV - 1 is an overexposed image, then in the overexposed image, the blocks with the block brightness higher than that of the corresponding blocks of the reference image are filtered out; similarly, in the underexposed images, the blocks with the block brightness lower than that of the corresponding blocks of the reference image are filtered out.

### The Third Embodiment

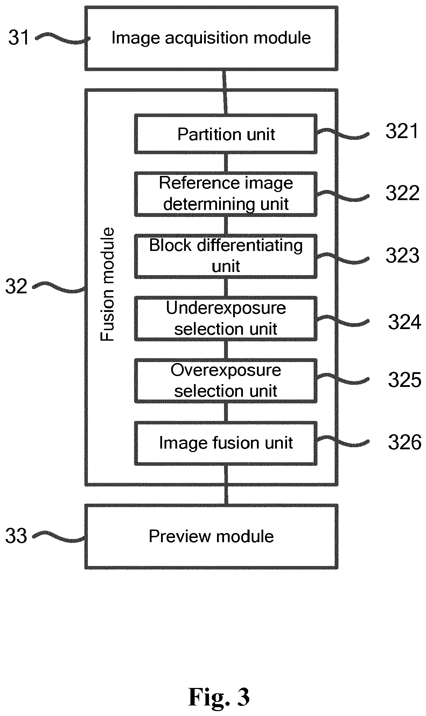

Fig. 3 is the structural diagram of the device for generating an HDR image provided in the third embodiment of the present disclosure. In the present technical solution, the device for generating an HDR image includes: an image acquisition module 31 and a fusion module 32.

The image acquisition module 31 is configured for obtaining simultaneously at least two images of the target to be shot by at least two shooting apparatuses configured with different exposure values on the terminal.

The fusion module 32 is configured for fusing the at least two images according to brightness so as to form the HDR image of the target to be shot.

Optionally, the fusion module 32 includes: a partition unit 321, a reference image determining unit 322, a block differentiating unit 323, an underexposure selection unit 324, an overexposure selection unit 325 and an image fusion unit 326.

Where, the partition unit 321 is configured to for partitioning the images; the reference image determining unit 322 is configured for selecting one of the at least two images as the reference image according to the exposure value; the block differentiating unit 323 is configured for determining the underexposed and overexposed blocks in the reference image according to the brightness of each block in the reference image; the underexposure selection unit 324 is configured for selecting the actually used blocks of the HDR image in the position of the underexposed blocks according to the brightness of the corresponding blocks of the underexposed blocks in different images; the overexposure selection unit 325 is configured for selecting the actually used blocks of the HDR image in the position of the overexposed blocks according to the brightness of the corresponding blocks of the overexposed blocks in different images; the image fusion unit 326 is configured for generating the HDR image according to the actually used blocks of the HDR image in the position of the underexposed blocks and the actually used blocks of HDR image in the position of the overexposed blocks.

Optionally, the block differentiating unit 323 is configured for:
determining the block with the block brightness higher than a threshold of overexposure brightness as an overexposed block, and determining the block with block brightness lower than a threshold of underexposure brightness as an underexposed block, according to the brightness of each block in the reference image, where the threshold of the overexposure and the threshold of underexposure brightness are determined according to the average value of brightness of the reference image; or
ranking the blocks according to the brightness of each block in the reference image, and selecting a set number of blocks as the overexposed and underexposed blocks respectively according to the ranking.

Moreover, the fusion model 32 also includes: a double-pass filter unit 327, which is configured for determining images other than the reference image as the overexposed and underexposed images according to the ranking of the exposure values of the shooting apparatuses after selecting one image from the at least two images as the reference image according to the exposure value; deleting in overexposed images the blocks with the block brightness higher than that of the corresponding blocks of the reference image; and, deleting in underexposed images the blocks with the block brightness lower than that of the corresponding blocks of the reference image.

Optically, the underexposure selection unit 324 is configured for selecting the block with the highest brightness in the image as the actually used block of the HDR image in the position of the underexposed block according to the brightness of the corresponding blocks of the underexposed block in different images.

Optically, the overexposure selection unit 325 is configured for selecting the block with lowest brightness in the image as the actually used block of the HDR image in the position of the overexposed block according to the brightness of the corresponding blocks of the overexposed block in different images.

The device can also include a preview module 33, which is configured for performing a preview display of the HDR image, after fusing the at least two images according to brightness so as to form the HDR image of the target to be shot.

The device for generating an HDR image provided by embodiments of the present disclosure can implement the method for generating an HDR image provided by embodiments of the present disclosure and have corresponding functions and beneficial effects.

In the above technical solution, in order to reduce the shooting time of the HDR image, three or more camera head module assemblies can be adopted. Each module assembly shoots one photo simultaneously, which can save the shooting time of other photos and can also realize the real-time preview of the HDR image, thus greatly improving the shooting experience of the HDR image.

One skilled in the art should understand that the above-mentioned respective modules or respective steps of the present disclosure can be realized by a general computing device. They can be installed together on a single computer device or distributed in a network consisting of multiple computer devices. Optionally, they can be realized with the aid of executable program codes of computer devices. Thus, they can be stored in storage units and executed by computer devices. Alternatively, they can be realized by making them into integrated circuit modules respectively or making multiple modules or steps of them into a single integrated circuit module. In this way, the present disclosure is not limited to combinations of any specific software and hardware.

Respective embodiments in the specification are described herein in a progressive way. Each embodiment puts emphasis on explaining the differences from other embodiments. The same or similar parts of different embodiments can be found by cross reference.

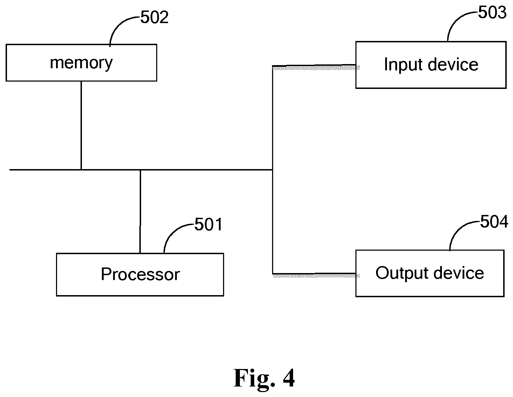

Fig. 4 is a schematic diagram of the hardware structure of a terminal (for example, a functional handset) provided in the embodiments of the present application. As shown in Fig. 4, the terminal comprises:
one or more processors 501 and an memory 502; Fig. 4 takes one processor 501 as an example.

The terminal can also comprise an input device 503 and an output device 504.

The processor 501, the memory 502, the input device 503 and the output device 504 in the terminal may be connected through buses or other manners. In Fig. 4, they are connected through buses, for example.

The memory 502, as a non-volatile computer readable storage medium, can be configured to store non-volatile software programs, non-volatile computer executable programs and modules, such as the program orders / modules corresponding to the method for generating an HDR image in the embodiments of the present application (for example, the image acquisition module 31 and fusion module 32 in Fig. 3). The processor 501 executes various functional applications and data processing of the server by running non-volatile software programs, instructions and modules stored in the memory 502, namely, realizing the method for generating an HDR image.

The memory 502 can also comprise program storage region and data storage region, where the program storage region can store operating systems and application programs required by at least one function; and the data storage region can store the data created by using the method for generating an HDR image. Moreover, the memory 502 can also comprise a high-speed Random Access Memory and also a non-volatile memory, such as at least one disc storage device, a flash memory device or other non-volatile solid state storage device. In some embodiments, the memory 502 optionally includes a memory located remotely relative to the processor 501.

The input device 503 may be configured to receive input digital or character information, user settings and key signal input related to the functional control. The output device 504 may include a display apparatus such as display screen, etc.

The one or more modules are stored in the memory 502. When executed by the one or more processors 501, they will implement the method for generating an HDR image in any above-the method embodiment.

Embodiments of the present disclosure provide a non-volatile storage medium having computer executable instructions stored thereon, the computer executable instructions are configured to perform the method for generating an HDR image in any embodiment of the present disclosure.

The embodiments above described herein are merely the preferred embodiments of the present disclosure, which are not used for limiting the present disclosure. Various modifications and changes to these embodiments can be made by those skilled in the art. Within the spirit and principle of the present invention, any modifications, equivalent substitutions, improvements, etc., should fall into the scope of protection of the present invention.

### Industrial Applicability

The method and device for generating an HDR image provided in embodiments of the present disclosure simultaneously obtains multiple images of the target to be shot through multiple shooting apparatuses with different exposure values, and fuses the multiple images according to the brightness of the multiple images, thus avoiding multiple shootings in the current HDR image acquisition process and effectively reducing the shooting time of the HDR image.

## Claims

1. A method for generating a High Dynamic Range HDR image, comprising:
obtaining simultaneously at least two images of a target to be shot by at least two shooting apparatuses configured with different exposure values on a terminal; and
fusing the at least two images according to brightness so as to form the HDR image of the target to be shot.

2. The method according to Claim 1, wherein, fusing the at least two images according to brightness so as to form the HDR image of the target to be shot comprises:
Partitioning each of the images;
selecting one of the at least two images as a reference image according to the exposure value;
determining an underexposed block and an overexposed block in the reference image according to the brightness of each block in the reference image;
selecting an actually used block of the HDR image in the position of the underexposed block according to the brightness of blocks corresponding to the underexposed block in different images;
selecting an actually used block of the HDR image in the position of the overexposed block according to the brightness of blocks corresponding to the overexposed block in different images; and
generating the HDR image according to the actually used block of the HDR image in the position of the underexposed block and the actually used block of HDR image in the position of the overexposed block.

3. The method according to Claim 2, wherein, determining the underexposed block and the overexposed block in the reference image according to the brightness of each block in the reference image comprises:
determining a block with the block brightness higher than a threshold of overexposure brightness as the overexposed block, and determining a block with block brightness lower than a threshold of underexposure brightness as the underexposed block, according to the brightness of each block in the reference image, wherein, the threshold of the overexposure and the threshold of underexposure brightness are determined according to an average value of brightness of the reference image; or
ranking the blocks according to the brightness of each block in the reference image, and selecting a set number of blocks as overexposed and underexposed blocks respectively according to the ranking.

4. The method according to Claim 2, wherein, after selecting one image from the at least two images as the reference image according to the exposure value, the method also comprises:
determining images other than the reference image as overexposed and underexposed images, respectively, according to the ranking of the exposure values of each of the shooting apparatuses;
deleting in overexposed images the blocks with the block brightness higher than that of the corresponding blocks of the reference image; and
deleting in underexposed images the blocks with the block brightness lower than that of the corresponding blocks of the reference image;

5. The method according to anyone of Claims 2-4, wherein
the selecting the actually used block of the HDR image in the position of the underexposed block according to the brightness of the blocks corresponding to the underexposed block in different images comprises: selecting a block with highest brightness as the actually used block of the HDR image in the position of the underexposed block according to the brightness of the blocks corresponding to the underexposed block in different images; and
the selecting the actually used block of the HDR image in the position of the overexposed block according to the brightness of the blocks corresponding to the overexposed block in different images comprises: selecting a block with lowest brightness as the actually used block of the HDR image in the position of the overexposed block according to the brightness of the blocks corresponding to the overexposed block in different images.

6. The method according to Claim 1, wherein, after fusing the at least two images according to brightness so as to form the HDR image of the target to be shot, the method also comprises:
displaying a preview of the HDR image.

7. A device for generating an HDR image, comprising:
an image acquisition module, configured for obtaining simultaneously at least two images of a target to be shot by at least two shooting apparatuses configured with different exposure values on the terminal; and
a fusion module, configured for fusing the at least two images according to brightness so as to form the HDR image of the target to be shot.

8. The device according to Claim 7, the fusion module comprises:
the partition unit, configured for partitioning the images;
a reference image determining unit, configured for selecting one of the at least two images as a reference image according to the exposure value;
a block differentiating unit, configured for determining an underexposed block and an overexposed block in the reference image according to the brightness of each block in the reference image;
a underexposure selection unit, configured for selecting an actually used blocks of the HDR image in the position of the underexposed blocks according to the brightness of blocks corresponding to the underexposed blocks in different images;
an overexposure selection unit, configured for selecting the actually used blocks of the HDR image in the position of the overexposed blocks according to the brightness of the blocks corresponding to the overexposed blocks in different images; and
a image fusion unit, configured for generating the HDR image according to the actually used blocks of HDR image in the position of the underexposed blocks and the actually used blocks of HDR image in the position of the overexposed blocks.

9. The device according to Claim 8, the block differentiating unit is configured for:
determining a block with the block brightness higher than a threshold of overexposure brightness as an overexposed block, and determining a block with block brightness lower than a threshold of underexposure brightness as an underexposed block, according to the brightness of each block in the reference image, wherein the threshold of the overexposure and the threshold of underexposure brightness are determined according to an average value of brightness of the reference image; or
ranking the blocks according to the brightness of each block in the reference image, and selecting a set number of blocks as the overexposed and underexposed blocks respectively according to the ranking.

10. The device according to Claim 8, the fusion module further comprises:
a double-pass filter unit, configured for determining images other than the reference image as the overexposed and underexposed images according to the ranking of the exposure values of the shooting apparatuses after selecting one image from the at least two images as the reference image according to the exposure value; deleting in overexposed images the blocks with the block brightness higher than that of the corresponding blocks of the reference image; and, deleting in underexposed images the blocks with the block brightness lower than that of the corresponding blocks of the reference image.

11. The device according to anyone of Claims 8-10, wherein:
the underexposure selection unit is configured for selecting the block with highest brightness in the image as the actually used block of the HDR image in the position of the underexposed block according to the brightness of the blocks corresponding to the underexposed block in different images;
the overexposure selection unit is configured for selecting a block with lowest brightness in the image as the actually used block of the HDR image in the position of the overexposed block according to the brightness of the blocks corresponding to the overexposed block in different images.

12. The device according to Claim 7, further comprising:
a preview module, configured for displaying a preview of the HDR image, after fusing the at least two images according to brightness so as to form the HDR image of the target to be shot.
